# EUROPEAN PATENT SPECIFICATION

(11) **EP 1 013 838 B1**
(45) Date of publication and mention of the grant of the patent: **14.01.2004**
(21) Application number: 99310095.7
(22) Date of filing: 15.12.1999
(51) Int. Cl.: E03F 1/00

(54) **Waste transport arrangement**
Abwasser-Abführanlage
Dispositif de transport d'eaux usées

(30) Priority: 23.12.1998 FI 982785
(43) Date of publication of application: 28.06.2000
(73) Proprietor: Evac International Oy, 00380 Helsinki (FI)
(72) Inventor: Olin, Henry, 02940 Espoo (FI)
(74) Representative: Newby, Martin John

(56) References cited:
- EP-A- 0 763 633
- GB-A- 2 194 260
- US-A- 3 629 099
- US-A- 4 713 847
- US-A- 5 133 853

## Description

This invention relates to a vacuum sewer system according to the preamble of claim 1 for transporting waste to a collecting container, municipal sewer or the like. Examples of such vacuum sewer systems are disclosed in GB-A-2 194 260 and EP-A-0 763 633.

One basic problem with vacuum sewer systems relates to the high noise they produce. The noise occurs when sewer valves open and close and when air is drawn into the open sewer. The vacuum sewer technique requires a relatively large volume of air to flow rapidly into the sewer immediately following the material to be transported. Furthermore, the sewer valve must open and close rapidly. These functions cause considerable noise-producing pressure variations.

In a large vacuum sewer system the lowering of the noise level is difficult. This is because a long sewer has a large total volume, which means that large amounts of air have to be drawn into the sewer.

An object of the invention is to create a sewer arrangement which is based entirely on a vacuum sewer technique, which can be adapted for use, in particular, in a large vacuum sewer system, in which the noise level is low and in which the operating control is easy to perform.

According to the present invention there is provided a vacuum sewer system as claimed in the ensuing claim 1. A vacuum sewer system of this kind combines the advantages of the vacuum sewer technique with a low noise level in spite of a large sewer volume.

The invention is based on two observations . Firstly, less noise is produced if lesser amounts of air have to be let into the sewer through a sanitary unit, e.g. a toilet. Secondly, the noise level is reduced if the average speed of the air stream in question can be lowered during the emptying of a sanitary unit.

According to the invention, the emptying of, and the waste transport from, a sanitary unit, e.g. a toilet, is made in two stages, both of which take part in parts of the sewer system which are under vacuum. In the first stage, waste transport is performed, as known per se, through a first sewer portion into an intermediate container under vacuum. This makes it possible to keep the transport distance short and the applied volume under vacuum relatively small. Irrespective of the total size of the vacuum sewer system, the first stage of waste transport can be carried out in a system of constant design, which improves operating reliability, because a constant system can be trimmed to optimize its function. Small-size vacuum sewer devices having this type of initial function are known from US-A-5133853. Their primary weakness lies in the fact that the vacuum induced waste transport ends in the intermediate container. From there on the waste must be transported by pressurised air or by another pressure agent, which would be really troublesome in a large system. According to the invention, the entire waste transport mechanism is based on vacuum sewer techniques, and no pressure agent other than ambient air is needed in any transport stage. Consequently, a system according to the invention can be used also in large vacuum sewer networks, for instance in passenger vessels and in hotels. Because of the specific characteristics of the invention, the size of the vacuum network has no negative influence on the noise level.

It is of advantage that a system according to the invention includes means for controlling the first stage of waste transport so that the air flowing into the intermediate container via the sanitary unit raises the pressure in the intermediate container to at least close to the pressure of the ambient air. This reduces the average speed of the air flow, which enhances reduction of the noise level. On the other hand, it is suitable to dimension the intermediate container so that, after the first transport stage, it contains sufficient air for the second waste transport stage to be carried out without feeding external air to the intermediate container or to the second sewer pipe downstream thereof. If no external air feed is needed, the system structure remains fairly simple and uncomplicated and the number of possible leak points is reduced. If the sanitary unit is a toilet, it is recommended that the volume of the intermediate container is at least 4 litre. It should preferably be considerably greater, for instance 10 to 15 litre.

In a preferred embodiment, the downstream end of the first sewer pipe debouches into the upper portion of the intermediate container in the form of an inverted U-shaped tubular bend. The downstream end of the first sewer pipe should be at a clearly higher level than the surface of the sewage collected in the intermediate container. Thereby, the air volume contained in the intermediate container as well as in the first sewer pipe is available in a technically advantageous manner for the second stage of waste transport.

If the first sewer pipe is kept fairly short, the waste transport taking part therein causes as little noise as possible. Generally, it is of advantage that the first sewer pipe has a total length, from the first sewer valve to its downstream end in the intermediate container, of at the most 3 m, preferably at the most 2 m.

In a vacuum sewer, the transport of material, in particular closely downstream of a sanitary unit, is generally performed most securely in an upwards direction. Hence it is of advantage, for the downstream end of the first sewer pipe to be at a considerably higher level than its upstream end.

It is of advantage to use the same vacuum level, the so-called "system vacuum" maintained by means of the vacuum generating means of the system, in the first as well as in the second stage of waste transport. This vacuum level preferably sets the absolute pressure in the sewer to about 75 to 30% of the pressure of the ambient air. The best operational reliability is generally achieved if the absolute pressure in the sewer is about 65 to 40% of the pressure of the ambient air.

The efficiency of the first stage of waste transport is improved if the volume of the intermediate container is made variable and controllable by means of a movable means, for instance a membrane, a piston or the like. The idea is to keep the volume of the intermediate container small at the beginning of the first stage of waste transport and enlarge it at the end of the same stage. This enhances the efficiency of the first stage of waste transport. In an advantageous embodiment, the movable means controlling the volume of the intermediate container is pressure operated, preferably operated by means of the "system vacuum". Thus a change of the volume of the intermediate container can be adapted to the first stage of waste transport, so that the volume of the intermediate container is automatically considerably smaller at the beginning of the first stage of transport than at the end of the same stage. It is of advantage to have a time related interconnection between the operation of the movable means and the operation of the first sewer valve. This can be obtained if the volume change is pneumatically controlled through the operational means of the first sewer valve. Such a system gives the best prospects for controlling the volume of the intermediate container in a manner best serving the function of the system. At the same time the structure of the control means remains fairly simple and is based on a control technique already previously used in vacuum sewer systems.

The structure of a system according to the invention can be simplified by arranging the connection of the intermediate container to thesecond sewer pipe through a second sewer valve, having its opening and closing movement functionally connected to the function of the first sewer valve of the sanitary unit connected to the first sewer pipe. The basic idea is that when one sewer valve opens the other closes and vice versa. Such a functional connection can be easily obtained by arranging the sewer pipes so that both sewer valves are close to one another so that their operating mechanisms can be mechanically interconnected. Alternatively, both sewer pipes may be connected to the same disc valve, so that a through-flow opening in the valve disc can take a position in line with one or the other of the two sewer pipes.

Reducing the noise level is in practice best obtained by installing the sanitary unit in a room space and the intermediate container outside the wall or any other limiting surface of that room. Thereby the limiting surface of the room acts as a noise insulation for the noise produced when filling the intermediate container in the first stage of waste transport and when emptying it in the second stage of waste transport.

Embodiments of the invention will now be described, by way of example only, with particular reference to the accompanying schematic drawings, in which:
Fig. 1 shows a system according to the invention adopted to serve a toilet;
Fig. 2 shows how the two sewer valves of the system of Fig. 1 may be functionally interconnected.

In the Figures, reference numeral 1 designates a vacuum toilet and reference numeral 2 designates a first sewer portion or pipe connected thereto. The first sewer pipe 2 leads to an intermediate container 3. The transport of waste material from the toilet 1 is controlled by means of a sewer valve 4, which is normally kept closed but which can be opened if there is a vacuum strong enough in the sewer pipe 2 to effect transport of toilet waste. The vacuum for the system is generated by a vacuum pump 5.

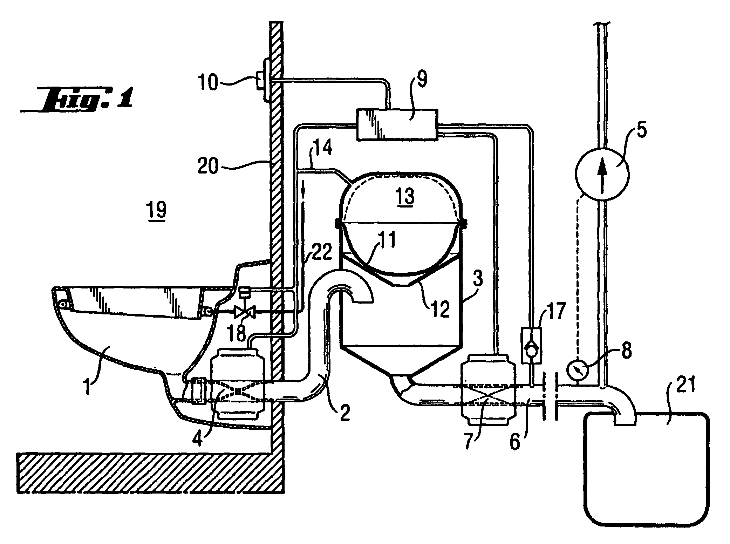

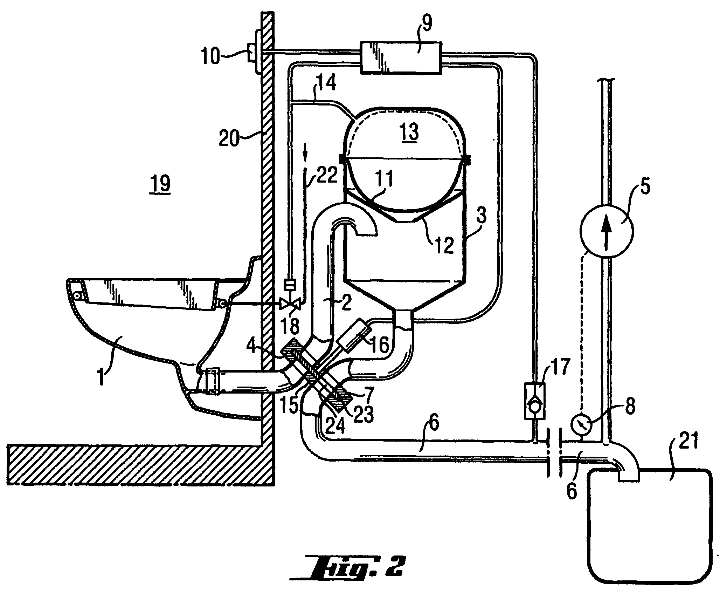

Another sewer portion or pipe 6 leads out from the intermediate container 3. This pipe 6 has, at its upstream end, a sewer valve 7 which, in principle, operates in the same manner as the sewer valve 4. When the sewer valve 4 is closed, the sewer valve 7 remains open, and when the sewer valve 4 is opened, the sewer valve 7 is closed. The sewer pipe 6 leads to a receptacle 21, which may by separated from the pipe 6 by a device (not shown) that allows the receptacle to be under atmospheric pressure in spite of the fact that the vacuum pump continuously maintains, in the pipe 6, a vacuum of about one half of atmospheric pressure. Devices of this kind are known, for instance, from the patent publications US-A-3629099, US-A-4184506, US-A-4034421 and US-4246925. As used herein the term "receptacle" includes any type of destination for the waste, such as a collecting container, as illustrated in Figs. 1 and 2, or a community sewer line.

The arrangement shown in Fig. 1 operates as follows. A pressure sensor 8 controls the vacuum pump 5 so that the pump continuously maintains, in the sewer pipe 6, a vacuum of about one half of atmospheric pressure with some variation between preset upper and lower limits. In the quiescent state of the arrangement this same vacuum also prevails in the intermediate container 3 and in the sewer pipe 2. In order to empty the toilet 1, the valve 7 is closed and the valve 4 is opened. The pressure of the ambient air rapidly pushes the waste present in the toilet into the sewer pipe 2 and through to the intermediate container 3. The valve 4 is kept open long enough to raise the pressure in the intermediate container 3 to about the level of the pressure of the ambient air, which happens in one or a few seconds. After this the valve 4 is closed and the valve 7 is opened. Because of the vacuum prevailing in the pipe 6, the air under atmospheric pressure in the intermediate container 3 pushes the waste collected in the intermediate container into the pipe 6. The valve 7 remains open so that, after a short while, the vacuum created by the vacuum pump 5 is again present in the intermediate container 3 and the pipe 2.

The functioning of the system is controlled by a control device 9 to which the toilet's flush demand push-button 10 is connected. The operation of the control device 9 is known per se and is therefore not explained here. The control device 9 may, however, be a device generally used in vacuum sewer systems and sold under the trade name EVAC 90. The control device 9 is connected through a check valve 17 to a portion of the vacuum sewer that is continuously under vacuum. By pressing the push-button 10 the operation of the control device 9 is started. The control device 9 includes means for connecting the different operating devices present to the vacuum source 5 of the system, thereby controlling as to function and time the opening and closing movements of the sewer valves 4 and 7 and of a closure valve 18 of a flush water pipe 22 that is connected to the toilet 1.

The intermediate container 3 can be provided with a device for controlling the volume of the container. In Fig. 1 such a device has the form of a movable airtight flexible membrane 11 installed in the upper portion of the container 3. When the container 3 is under vacuum, the membrane 11 is in a lower position, pressed by ambient air against a support plate 12. The inner volume of the container 3 is then at a minimum which, in the embodiment shown, is from about 5 to 7 litre. When the sewer valve 4 is opened, the control device 9 connects, through the pipe 14, the space 13 (typically also from about 5 to 7 litre) above the membrane 11 of the container 3 to the vacuum source of the system. This causes the membrane 11 to adopt the position, shown in dashed lines, at or close to the interior surface of the upper portion of the container 3. The membrane 11 stays in this position until the sewer valve 4 is again closed. In this condition, before the opening of the sewer valve 7, the pressure in the container 3 is atmospheric, which keeps the membrane 11 in its upper position, even when the device 9 no longer maintains a vacuum on the upper side of the membrane.

The arrangement described gives the following advantages. The volume of the intermediate container 3 is initially small, which means that the amount of air required for transporting waste from the toilet 1 to the container 3 is also relatively small. This supports a reduction of the noise level. When the volume of the container 3 is enlarged by means of moving the membrane 11, additional air flows into the container 3 through the sewer valve 4, but the speed of this flow is relatively low thereby producing little noise.

To prevent the waste present in the intermediate container 3 from flowing back into the pipe 2, it is of advantage that the downstream end of the sewer position 2 debouches into the upper part of the free inner space of the intermediate container 3. Preferably the downstream end of the sewer portion 2 forms an inverted U-bend which opens downwards, for instance as shown in Fig. 1. The total length of the sewer portion 2 from the valve 4 to the downstream end of the sewer portion is, in the embodiment shown in Fig. 1, typically about 1.5 m. Of this length, the major part extends upwards from the toilet which is advantageous for obtaining an effective vacuum induced transport of waste material.

In the embodiment shown in Fig. 2, the sewer valves 4 and 7 are arranged as a disc valve. A disc valve of a type suitable for this purpose is shown, for instance, in US-A-4713847. The valves 4 and 7 are combined into a single valve device 15 connected to the pipe 2 as well as to the pipe 6. In the housing of the valve device 15, there is a rotatable circular valve disc 23 receiving its movement power from an operating device 16. The valve disc 23 may be provided with a single through-flow opening 24 which can be moved to be in line either with the pipe 2 or with the pipe 6. Alternatively, the valve disc 23 may have two through-flow openings of which one moves away from the position of the pipe 2 when the other moves to the position of the pipe 6 and vice versa. If two through-flow openings are used, it is possible, in the illustrated embodiment, to arrange the movement of the valve body (valve disc 23) so that a smaller turning angle of the valve disc 23 is needed than if a single through-flow opening is used. This is also possible when there is only one through-flow opening if the pipes 2, 6 are not diametrically opposed to the turning axis of the valve disc 23 but are instead angularly closer to each other. It is of course possible to use other types of valve. For example, instead of a rotatable circular valve disc, a sector plate or a linearly moving plate could be used for the valve body. The operating unit 16 of the combined valve 15 is only shown schematically in Fig. 2. It could be a vacuum controlled device, powered by the pressure difference between the "system vacuum" and the ambient air. Alternatively, for instance, it could be electrically powered.

In the embodiments of both Figs. 1 and 2, the toilet 1 is installed in a room 19. The intermediate container 3 and the control devices connected thereto are on the other side of a wall 20 of the room 19, which reduces the noise level in the room 19.

## Claims

1. A vacuum sewer system including a sanitary unit (1), that is to be emptied from time to time, an intermediate container (3), a first sewer pipe (2) being connected to the sanitary unit (1) via a normally closed first sewer valve (4) and leading to the intermediate container (3), means (5) for generating vacuum in the intermediate container (3) and the first sewer pipe (2), means (9) for controlling the operation of the first sewer valve (4) to allow thereby a vacuum induced waste transport from the sanitary unit (1) through the first sewer pipe (2) to the intermediate container (3), a receptacle (21), a second sewer pipe (6) leading out from the intermediate container (3) and having a second sewer valve (7) at its upstream end, whereby the second sewer pipe (6) leads to the receptacle (21), **characterised in that** the means (5) for generating vacuum is further arranged to generate vacuum in the second sewer pipe (6), and **in that** the means (9) for controlling the operation of the first sewer valve (4), in a first stage, is arranged to open the first sewer valve (4) and to close the second sewer valve (7) in order to produce a vacuum induced transport of waste from the sanitary unit (1) to the intermediate container (3) and, in a second stage, is arranged to close the first sewer valve (4) and to open the second sewer valve (7), in order to produce a vacuum induced transport of waste from the intermediate container (3) through the second sewer pipe (6) to the receptacle (21).

2. A system according claim 1, **characterised in that** the system includes control means (9) for ensuring that sufficient air flows into the intermediate container (3), via the sanitary unit (1), during the first stage of the vacuum transport, so that the pressure in the intermediate container (3) rises to at least close to atmospheric pressure.

3. A system according to claim 1 or 2, **characterised in that** the intermediate container (3) is dimensioned to contain, after the first waste transport stage, sufficient air to ensure that the second waste transport stage can be properly carried out without external air feeding.

4. A system according to claim 1, 2 or 3 **characterised in that** the volume of the intermediate container (3) is at least 4 litre, preferably from 10 to 15 litre.

5. A system according to any of the preceding claims, **characterised in that** the downstream end of the first sewer pipe (2) debouches into an upper portion of the intermediate container (3).

6. A system according to any of the preceding claims, **characterised in that** the total length of the first sewer pipe (2), from the first sewer valve (4) to the downstream end of the first sewer pipe, is at the most 3 m, preferably at the most 2 m.

7. A system according to any of the preceding claims, **characterised in that** the downstream end of the first sewer pipe (2) is at a clearly higher level than that of the first sewer valve (4).

8. A system according to any of the preceding claims, **characterised in that** the nominal level of the pressure used in the vacuum system, as known per se, is from about 75 to 30%, preferably from 65 to 40% of the pressure of the ambient air.

9. A system according to any of the preceding claims, **characterised in that** the volume of the intermediate container (3) is controllable by means of a movable means (11).

10. A system according to claim 9, **characterised in that** the position of the movable means (11) is pressure controlled, preferably controlled by means of the vacuum produced by the vacuum generating means (5), so that, at the beginning of the first stage of waste transport, the volume of the intermediate container (3) is considerably smaller than at the end of the first stage of waste transport.

11. A system according to claim 9 or 10, each when dependent on claim 2, **characterised in that** there is a time related interconnection between the operation of the movable means (11) and the operation of the first sewer valve (4) and **in that** the operation of the movable means (11) is preferably pneumatically controlled through said control means (9) which also controls operation of the sewer valve (4).

12. A system according to any of the preceding claims, **characterised in that** the opening and closing movement of the second sewer valve (7) is functionally, preferably mechanically, connected to the function of the first sewer valve (4) so that when one sewer valve opens the other closes and vice versa.

13. A system according to any one of the preceding claims, **characterised in that** the sanitary unit (1) is located in a room space (19) of the system, the room space (19) having a limiting surface (20) and **in that** the intermediate container (3) is located outside the limiting surface of the room space (19).

## Patentansprüche

1. Vakuumabwasserkanalsystem mit einer Sanitäreinheit (1), die von Zeit zu Zeit zu leeren ist, einem Zwischenbehälter (3), einem ersten Abwasserrohr (2), das über ein normalerweise geschlossenes erstes Abwasserventil (4) an die Sanitäreinheit (1) angeschlossen ist und zu dem Zwischenbehälter (3) führt, ein Mittel (5) zum Erzeugen eines Vakuums in dem Zwischenbehälter (3) und dem ersten Abwasserrohr (2), ein Mittel (9) zum Steuern der Betätigung des ersten Abwasserventils (4), um dadurch einen durch das Vakuum induzierten Abwassertransport von der Sanitäreinheit (1) durch das erste Abwasserrohr (2) zu dem Zwischenbehälter (3) zu gestatten, einem Behältnis (21), einem zweiten Abwasserrohr (6), das aus dem Zwischenbehälter (3) herausführt und ein zweites Abwasserventil (7) an seinem stromaufwärtigen Ende aufweist, wobei das zweite Abwasserrohr (6) zu dem Behältnis (21) führt, **dadurch gekennzeichnet, dass** das Mittel (5) zum Erzeugen eines Vakuums ferner dafür ausgelegt ist, ein Vakuum in dem zweiten Abwasserrohr (6) zu erzeugen, und dass das Mittel (9) zum Steuern der Betätigung des ersten Abwasserventils (4) dafür ausgelegt ist, in einer ersten Stufe das erste Abwasserventil (4) zu öffnen und das zweite Abwasserventil (7) zu schließen, um einen vakuuminduzierten Abwassertransport aus der Sanitäreinheit (1) zu dem Zwischenbehälter (3) zu erzeugen, und in einer zweiten Stufe das erste Abwasserventil (4) zu schließen und das zweite Abwasserventil (7) zu öffnen, um einen vakuuminduzierten Abwassertransport aus dem Zwischenbehälter (3) durch das zweite Abwasserrohr (6) zu dem Behältnis (21) zu erzeugen

2. System nach Anspruch 1, **dadurch gekennzeichnet, dass** das System Steuermittel (9) umfasst, um sicherzustellen, dass während der ersten Stufe des Vakuumtransports ausreichend Luft über die Sanitäreinheit (1) in den Zwischenbehälter (3) strömt, so dass der Druck in dem Zwischenbehälter (3) auf zumindest nahe Atmosphärendruck ansteigt.

3. System nach Anspruch 1 oder 2, **dadurch gekennzeichnet, dass** der Zwischenbehälter (3) so bemessen ist, dass er nach der ersten Abwassertransportstufe ausreichend Luft enthält, um sicherzustellen, dass die zweite Abwassertransportstufe ohne äußere Luftzufuhr korrekt ausgeführt werden kann.

4. System nach Anspruch 1, 2 oder 3, **dadurch gekennzeichnet, dass** das Volumen des Zwischenbehälters (3) zumindest 4 Liter und vorzugsweise zwischen 10 bis 15 Liter beträgt.

5. System nach einem der vorhergehenden Ansprüche, **dadurch gekennzeichnet, dass** das stromabwärtige Ende des ersten Abwasserrohrs (2) in einen oberen Abschnitt des Zwischenbehälters (3) mündet.

6. System nach einem der vorhergehenden Ansprüche, **dadurch gekennzeichnet, dass** die Gesamtlänge des ersten Abwasserrohrs (2) von dem ersten Abwasserventil (4) zu dem stromabwärtigen Ende des ersten Abwasserrohrs (2) höchstens 3 m und vorzugsweise höchstens 2 m beträgt.

7. System nach einem der vorhergehenden Ansprüche, **dadurch gekennzeichnet, dass** das stromabwärtige Ende des ersten Abwasserrohrs (2) sich auf einem deutlich höheren Niveau befindet, als das erste Abwasserventil (4) .

8. System nach einem der vorhergehenden Ansprüche, **dadurch gekennzeichnet, dass** der an sich bekannte Sollpegel des in dem Abwasserkanalsystems verwendeten Drucks zwischen 75 und 30%, vorzugsweise zwischen 65 und 40%, des Drucks der Umgebungsluft liegt.

9. System nach einem der vorhergehenden Ansprüche, **dadurch gekennzeichnet, dass** das Volumen des Zwischenbehälters (3) durch ein bewegliches Mittel (11) steuerbar ist.

10. System nach Anspruch 9, **dadurch gekennzeichnet, dass** die Position des beweglichen Mittels (11) druckgesteuert ist und vorzugsweise durch das Vakuum gesteuert wird, das von den vakuumerzeugenden Mittel (5) erzeugt wird, so dass am Beginn der ersten Stufe des Abwassertransports das Volumen des Zwischenbehälters (3) beträchtlich kleiner als am Ende der ersten Stufe des Abwassertransports ist.

11. System nach Anspruch 9 oder 10, falls jeweils abhängig vom Anspruch 2, **dadurch gekennzeichnet, dass** eine zeitlicher Zusammenhang zwischen der Betätigung des beweglichen Mittels (11) und der Betätigung des ersten Abwasserventils (4) besteht und dass die Betätigung des beweglichen Mittels (11) vorzugsweise pneumatisch durch das Steuermittel (9) gesteuert wird, das ebenso die Betätigung des Abwasserventils (4) steuert.

12. System nach einem der vorhergehenden Ansprüche, **dadurch gekennzeichnet, dass** die Öffnungs- und Schließbewegung des zweiten Abwasserventils (7) funktionell, vorzugsweise mechanisch, mit der Funktion des ersten Abwasserventils (4) verbunden ist, so dass, wenn ein Abwasserventil sich öffnet, das andere schließt und umgekehrt.

13. System nach einem der vorhergehenden Ansprüche, **dadurch gekennzeichnet, dass** die Sanitäreinheit (1) sich in einem Raum (19) des Systems befindet, der eine Begrenzungsfläche (20) aufweist, und dass der Zwischenbehälter (3) sich außerhalb der Begrenzungsfläche (20) des Raumes (19) befindet.

## Revendications

1. Système d'évacuation par aspiration d'eaux usées comprenant un appareil sanitaire (1), qui doit être vidé de temps en temps, un récipient intermédiaire (3), une première canalisation d'évacuation des eaux usées (2) reliée à l'appareil sanitaire par l'intermédiaire d'une première vanne d'égout normalement fermée (4) et aboutissant au récipient intermédiaire (3), un moyen (5) de génération d'un vide dans le récipient intermédiaire (3) et dans la première canalisation d'évacuation des eaux usées (2), un moyen (9) de contrôle du fonctionnement de la première canalisation d'évacuation des eaux usées (4) pour permettre ainsi un transport par aspiration des eaux usées à partir de l'appareil sanitaire (1) jusqu'au récipient intermédiaire (3) en passant par la première canalisation d'évacuation des eaux usées (2), une cuve collectrice (21), une deuxième canalisation d'évacuation des eaux usées (6) partant du récipient intermédiaire (3) et possédant, à son extrémité amont, une deuxième vanne d'égout (7), ladite deuxième canalisation d'évacuation des eaux usées (6) aboutissant à la cuve collectrice (21), **caractérisé en ce que** le moyen (5) de génération du vide est en outre organisé de manière à générer un vide dans la deuxième canalisation d'évacuation des eaux usées (6), et **en ce que** le moyen (9) de contrôle du fonctionnement de la première vanne d'égout (4) est organisé, premièrement, de manière à ouvrir la première vanne d'égout (4) et à fermer la deuxième vanne d'égout (7) afin de produire un transport par aspiration des eaux usées de l'appareil sanitaire (1) au récipient intermédiaire (3) et est organisé, deuxièmement, de manière à fermer la première vanne d'égout (4) et à ouvrir la deuxième vanne d'égout (7), afin de produire un transport par aspiration des eaux usées du récipient intermédiaire (3) à la cuve collectrice (24) en passant par la deuxième canalisation d'évacuation des eaux usées (6) jusqu'à la cuve collectrice (21).

2. Système selon la revendication 1, **caractérisé en ce que** le système comprend un moyen de contrôle (9) pour garantir qu'une quantité suffisante d'air arrive dans le récipient intermédiaire (3), par l'intermédiaire de l'appareil sanitaire (1), durant la première étape de transport par aspiration, de sorte que la pression dans le récipient intermédiaire (3) s'élève jusqu'à une valeur au moins proche de la pression atmosphérique.

3. Système selon la revendication 1 ou 2, **caractérisé en ce que** le récipient intermédiaire (3) est dimensionné pour contenir, après la première étape de transport des eaux usées, une quantité d'air suffisante pour garantir une exécution correcte de la deuxième étape de transport des eaux usées sans alimentation d'air externe.

4. Système selon la revendication 1, 2 ou 3, **caractérisé en ce que** le volume du récipient intermédiaire (3) est de 4 litres au moins, préférablement de 10 à 15 litres.

5. Système selon l'une quelconque des revendications précédentes, **caractérisé en ce que** l'extrémité aval de la première canalisation d'évacuation des eaux usées (2) débouche dans une partie supérieure du récipient intermédiaire (3).

6. Système selon l'une quelconque des revendications précédentes, **caractérisé en ce que** la longueur totale de la première canalisation d'évacuation des eaux usées (2), de la première vanne d'égout (4) à l'extrémité aval de la première canalisation d'évacuation des eaux usées, est de 3 m au maximum, préférablement de 2 m au maximum.

7. Système selon l'une quelconque des revendications précédentes, **caractérisé en ce que** l'extrémité aval de la première canalisation d'évacuation des eaux usées (2) se trouve à un niveau nettement plus élevé que celui de la première vanne d'égout (4).

8. Système selon l'une quelconque des revendications précédentes, **caractérisé en ce que** le niveau nominal de la pression utilisée dans le système à dépression, tel qu'il est connu en soi, est d'environ 75 à 30 %, préférablement de 65 à 40 %, de la pression de l'air ambiant.

9. Système selon l'une quelconque des revendications précédentes, **caractérisé en ce que** le volume du récipient intermédiaire (3) peut être contrôlé par un moyen mobile (11).

10. Système selon la revendication 9, **caractérisé en ce que** la position du moyen mobile (11) est contrôlée par pression, préférablement contrôlée par le vide produit par le système générateur de vide (5), de sorte que, au début de la première étape de transport des eaux usées, le volume du récipient intermédiaire (3) soit considérablement plus faible qu'à la fin de la première étape du transport des eaux usées.

11. Système selon la revendication 9 ou 10, chacune étant dépendante de la revendication 2, **caractérisé en ce qu'**il existe un lien temporel entre le fonctionnement du moyen mobile (11) et le fonctionnement de la première vanne d'égout (4) et **en ce que** le fonctionnement du moyen mobile (11) est préférablement contrôlé pneumatiquement par ledit moyen de contrôle (9) qui contrôle aussi le fonctionnement de la vanne d'égout (4).

12. Système selon l'une quelconque des revendications précédentes, **caractérisé en ce que** le mouvement d'ouverture et de fermeture de la deuxième vanne d'égout (7) est fonctionnellement, préférablement mécaniquement, lié au fonctionnement de la première vanne d'égout (4), de sorte que quand une vanne d'égout s'ouvre l'autre se ferme et vice versa.

13. Système selon l'une quelconque des revendications précédentes, **caractérisé en ce que** l'appareil sanitaire (1) est situé dans un espace formé par une pièce (19) du système, l'espace formé par ladite pièce (19) comportant une surface limitante (20) et **en ce que** le récipient intermédiaire (3) est situé à l'extérieur de la surface limitante de l'espace formé par ladite pièce (19).
